# EUROPEAN PATENT SPECIFICATION

(11) **EP 4 386 047 B1**
(45) Date of publication and mention of the grant of the patent: **05.02.2025**
(21) Application number: 22212708.6
(22) Date of filing: 12.12.2022
(51) Int. Cl.: C08L 23/06, C08L 23/08

(54) **HINGED POLYETHYLENE COMPONENT**
SCHARNIERTE POLYETHYLENKOMPONENTE
COMPOSANT EN POLYÉTHYLÈNE ARTICULÉ

(43) Date of publication of application: 19.06.2024
(73) Proprietor: SABIC Global Technologies B.V., 4612 PX Bergen op Zoom (NL)
(72) Inventor: Shi, Huajie, 6160 GA Geleen (NL); Guan, Qingling, 6160 GA Geleen (NL)
(74) Representative: Sabic Intellectual Property Group

(56) References cited:
- EP-A1- 1 304 353
- WO-A1-00/71615
- US-A1- 2016 289 435
- US-B1- 9 783 664

## Description

The present invention relates to a hinged component comprising a polyethylene composition.

The most commonly used material for a hinged component is polypropylene. Polypropylene has a superior hinge fatigue performance, good environmental stress crack resistance (ESCR) performance, low cost and ease of processing. However, bottles or tubes for cosmetic/personal care applications having a hinged cap are usually made of polyethylene. This means that the bottles and tubes and the unseparated polypropylene caps will end up after use in the mechanical recycled stream as contamination and deteriorate the mechanical performance of the polyethylene recyclates. Therefore, there is a need to develop polyethylene based hinged components to enable mono-material packaging solution in order to achieve better sustainability.

However, the hinged component still need to have a superior hinge fatigue performance and good mechanical performance. In particular, hinge fatigue performance, environmental stress crack resistance (ESCR), and processability of the material used for the hinged components are important. Likewise impact and cold temperature toughness are of importance. Consequently, new materials for a hinged component that meet those requirements need to be developed.

US9783664 (D1) relates to a hinged component comprising a polyethylene composition having a molecular weight distribution M_{w}/Mₙ, of from 2.0 to 7.0; a density of at least 0.949 g/cm³; a melt index, I₂ of from greater than 10.0 g/10 min to 20.0 g/10 min, a Z-average molecular weight Mz, of less than 300,000; and a melt flow ratio I₂₁/I₂, of from 24 to 38; where the hinged component has an average hinge life of more than 4100 cycles.

US2016289435 (D2) relates to a dual reactor solution polymerization process gives high density polyethylene compositions containing a first ethylene copolymer and a second ethylene copolymer and which have high dimensional stability, excellent processability as well as good organoleptic properties and reasonable stress cracking resistance. The polyethylene compositions are suitable for compression molding or injection molding applications and are useful, for example, in the manufacture of caps and closures for bottles, and for example, in bottles containing non-pressurized liquids.

It has now surprisingly been found that the use of a polyethylene composition comprising high density polyethylene (HDPE) and linear low density polyethylene (LLDPE) in the production of a hinged component results in an excellent combination of ESCR and hinge fatigue performance. At the same time the hinged component allows easy recycling.

The hinged component according to the invention comprises a polyethylene composition, the polyethylene composition comprising
- a high density polyethylene (HDPE) having a density in the range of 950 to 960 kg/m3 measured according to ISO 1183, a melt flow index in the range of 5 to 40 g/10min measured according to ISO 1133 at a load 2.16 kg and a temperature of 190 °C, a weight average molecular weight Mw measured by size exclusion chromatography of in the range in the range of 50,000 to 110,000 g/mol, a molecular weight distribution Mw/Mn in the range in the range of 4.0 to 10.0, and
- a linear low density polyethylene (LLDPE) having a density in the range of 920 to 940 kg/m³ measured according to ISO 1183, a melt flow index in the range of 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range of 3 to 7;

wherein the polyethylene composition has an overall density in the range of 935 to 950 kg/m³ measured according to ISO 1183 and an overall melt flow index from 5 to 30 g/10min measured according to ISO 1133 at a load 2.16 kg and a temperature of 190 °C,
wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

The hinged component according to the invention shows an excellent combination of ESCR and hinge fatigue performance. At the same time the hinged component allows easy recycling.

Preferably, the hinged component comprises HDPE in an amount which is in the range of 40-60 % by weight, preferably in the range of 45-55 % by weight of the total amount of HDPE and LLDPE, wherein the total amount of the HDPE and LLDPE is 100 % by weight.

Preferably, the hinged component comprises LLDPE in an amount which is in the range of 40-60 % by weight, preferably in the range of 45-55 % by weight of the total amount of HDPE and LLDPE, wherein the total amount of the HDPE and LLDPE is 100 % by weight.

More preferably, the hinged component comprises HDPE in an amount which is in the range of 48-52 % by weight of the total amount of HDPE and LLDPE.

More preferably, the hinged component comprises LLDPE in an amount which is in the range of 48-52 % by weight of the total amount of HDPE and LLDPE.

Most preferably, the hinged component comprises HDPE in an amount which is in the range of 48-52 % by weight of the total amount of HDPE and LLDPE;
and LLDPE in an amount which is in the range of 48-52 % by weight of the total amount of HDPE and LLDPE.

Most preferably, the hinged component comprises HDPE in an amount which is equal or higher than the amount of LLDPE by weight based on the total amount of HDPE and LLDPE .

### High density polyethylene (HDPE)

The production processes of the HDPE and is summarised in "Handbook of Polyethylene" by Andrew Peacock (2000; Dekker; ISBN 0824795466) at pages 43-66. Suitable catalysts for the production of polyethylene include Ziegler Natta catalysts, chromium based catalysts and single site metallocene catalysts.

The unimodal polyethylene may be obtained for example by polymerizing ethylene and optionally at least one olefin comonomer in slurry in the presence of a silica-supported chromium-containing catalyst and/or an alkyl boron compound. Suitable comonomers include for example propylene, 1-butene, 1-pentene, 4-methyl-1-pentene, 1-hexene and/or 1-octene.

The unimodal polyethylene may be obtained for example by polymerizing ethylene and optionally at least one olefin comonomer in a gas phase polymerisation or in slurry polymerisation process.

The production processes for bimodal high density polyethylene (HDPE) are summarised at pages 16-20 of "PE 100 Pipe systems" (edited by Bromstrup; second edition, ISBN 3-8027-2728-2). The production of bimodal high density polyethylene (HDPE) via a low pressure slurry process is described by Alt et al. in "Bimodal polyethylene-Interplay of catalyst and process" (Macromol.Symp. 2001, 163, 135-143). The characteristics of the polyethylene are determined amongst others by the catalyst system and by the concentrations of catalyst, comonomer and hydrogen. The production of bimodal high density polyethylene (HDPE) via a low pressure slurry process may also be performed via a three stage process. The concept of the two stage cascade process is elucidated at pages 137-138 by Alt et al. "Bimodal polyethylene-Interplay of catalyst and process" (Macromol. Symp. 2001, 163).

The HDPE according to the invention may be unimodal HDPE or multimodal HDPE for example bimodal HDPE and trimodal HDPE. Preferably, the HDPE is unimodal HDPE. Unimodal HDPE needs to be understood as an HDPE that has been produced in one reactor under the same reaction conditions and one type of catalyst species.

Bimodal HDPE needs to be understood as an HDPE that is produced in two reactors in series under different polymerization conditions. Bimodal HDPE may for example be a reactor blend of HDPE produced in one reactor and LLDPE produced in another reactor and where the reactors are used in series.

Bimodal HDPE may also be a HDPE that is produced in one reactor in the presence of a catalyst system that comprises two or more different catalyst species, for example a catalyst system using two different active metal species, wherein those catalyst species lead to a reactor blend of polyethylene's having different properties, for example a different density and/or MFI.

Multimodal HDPE needs to be understood as an HDPE that is produced in two or more reactors in series under different polymerization conditions. Multimodal HDPE may for example be a reactor blend of HDPE produced in one or more reactors and LLDPE produced in one or more reactors.

The molecular weight distribution of the HDPE measured by SEC may show one or more distinct maxima or might show a distinctly broadened molecular weight distribution in comparison with the curves for the individual fractions of material with different composition.

Bimodal or multimodal HDPE may show one, two or several maxima/peaks in size exclusion chromatograms. It needs to be understood that the number of maxima/peaks or shoulders is not related to the terms unimodal, bimodal or multimodal HDPE according to the invention. A bimodal HDPE may for example show only one maxima/peak in a size exclusion chromatogram.

The hinged component may comprise HDPE having a density in the range of 952 to 956 kg/m³, as measured according to ISO 1183, method A.

The hinged component may comprise HDPE having a MFI in the range of 8 to 40 g/10min, preferably of 20 to 35 g/10min, more preferred of 28 to 35 g/10min, as measured according to ISO 1131-1:2011 at 190°C and at a load of 2.16 kg.

The hinged component may comprise HDPE having a Mw in the range of 55,000 to 80,000 g/mol, preferably in the range of 55,000 to 70,000 g/mol, more preferably in the range of 55,000 to 65,000 g/mol.

The hinged component may comprise HDPE having a Mw/Mn in the range of to 4 to 8, preferably in the range from 4-7, more preferably in the range from 5-6.

The hinged component may comprise HDPE having a density in the range of 952 to 956 kg/m³, as measured according to ISO 1183, method A, and a MFI in the range of 8 to 40 g/10min, preferably of 20 to 35 g/10min, more preferred of 28 to 35 g/10min, as measured according to ISO 1131-1:2011 at 190°C and at a load of 2.16 kg,

The hinged component may comprise HDPE having a density in the range of 952 to 956 kg/m³, as measured according to ISO 1183, method A, and a MFI in the range of 8 to 40 g/10min, preferably of 20 to 35 g/10min, more preferred of 28 to 35 g/10min, as measured according to ISO 1131-1:2011 at 190°C and at a load of 2.16 kg, and
a Mw in the range of 55,000 to 80,000 g/mol, preferably in the range of 55,000 to 70,000 g/mol, more preferably in the range of 55,000 to 65,000 g/mol.

The hinged component may comprise HDPE having a density in the range of 952 to 956 kg/m³, as measured according to ISO 1183, method A, and a MFI in the range of 8 to 40 g/10min, preferably of 20 to 35 g/10min, as measured according to ISO 1131-1:2011 at 190°C and at a load of 2.16 kg, and a Mw in the range of 55,000 to 80,000 g/mol.

The hinged component may preferably comprise HDPE having a density in the range of 952 to 956 kg/m³, as measured according to ISO 1183, method A, and a MFI in the range of 8 to 40 g/10min, preferably of 20 to 35 g/10min, as measured according to ISO 1131-1:2011 at 190°C and at a load of 2.16 kg, and
a Mw in the range of 55,000 to 65,000 g/mol.

The hinged component may comprise HDPE having a density in the range of 952 to 956 kg/m³, as measured according to ISO 1183, method A, and
a MFI in the range of 8 to 40 g/10min, preferably of 20 to 35 g/10min, more preferred of 28 to 35 g/10min, as measured according to ISO 1131-1:2011 at 190°C and at a load of 2.16 kg, and
a Mw in the range of 55,000 to 80,000 g/mol, preferably in the range of 55,000 to 70,000 g/mol, more preferably in the range of 55,000 to 65,000 g/mol, and
a Mw/Mn in the range of to 4 to 8, preferably in the range from 4-7, more preferably in the range from 5-6.

### Linear low density polyethylene (LLDPE)

Linear low-density polyethylene (LLDPE) may for example be obtained by polymerizing ethylene with at least one α-olefin, which may be selected from 1-butene, 1-pentene, 4-methyl-1-pentene, 1-hexene, 1-heptene and/or 1-octene, preferably 1-butene.

Linear low-density polyethylene (LLDPE) may be produced for example using at least one or exactly one metallocene catalyst or at least one or exactly one Ziegler-Natta catalyst.

Preferably, the linear low-density polyethylene (LLDPE) used according to the invention may be produced for example using at least one Ziegler-Natta catalyst comprising Mg and at least one or one of Ti, Hf or Zr.

LLDPE may preferably be produced using a gas phase or slurry process. The production processes of polyethylenes are summarised in "Handbook of Polyethylene" by Andrew Peacock (2000; Dekker; ISBN 0824795466) at pages 43-66.

The hinged component may comprise LLDPE having a density in the range of 925 to 935 kg/m³, preferably in the range of 930 to 935 kg/m³ as measured according to ISO 1183, method A.

The hinged component may comprise LLDPE having a MFI in the range of 2.0 to 15 g/10min, preferably of 2 to 10 g/10min, more preferred of 2 to 8 g/10min, as measured according to ISO 1131-1:2011 at 190°C and at a load of 2.16 kg.

The hinged component may comprise LLDPE having a Mw in the range of to 50,000 to 100,000 g/mol, preferably 70,000 to 90,000 g/mol, more preferably 80,000 to 90,000 g/mol.

The hinged component may comprise LLDPE having a Mw/Mn in the range of to 4 to 5.

The hinged component may comprise LLDPE having a density in the range of 925 to 935 kg/m³, preferably in the range of 930 to 935 kg/m³ as measured according to ISO 1183, method A, and a MFI in the range of 2.0 to 15 g/10min, preferably of 2 to 10 g/10min, more preferred of 2 to 8 g/10min, as measured according to ISO 1131-1:2011 at 190°C and at a load of 2.16 kg.

The hinged component may comprise LLDPE having preferably a density in the range of of 930 to 935 kg/m³ as measured according to ISO 1183, method A, and a MFI in the range of of 2 to 8 g/10min, as measured according to ISO 1131-1:2011 at 190°C and at a load of 2.16 kg.

The hinged component may comprise LLDPE having a density in the range of 925 to 935 kg/m³, preferably in the range of 930 to 935 kg/m³ as measured according to ISO 1183, method A, and
a MFI in the range of 2.0 to 15 g/10min, preferably of 2 to 10 g/10min, more preferred of 2 to 8 g/10min, as measured according to ISO 1131-1:2011 at 190°C and at a load of 2.16 kg, and
a Mw in the range of to 50,000 to 100,000 g/mol, preferably 70,000 to 90,000 g/mol, more preferably 80,000 to 90,000 g/mol.

The hinged component may comprise LLDPE preferably having a density in the range of of 930 to 935 kg/m³ as measured according to ISO 1183, method A, and
a MFI in the range of of 2 to 8 g/10min, as measured according to ISO 1131-1:2011 at 190°C and at a load of 2.16 kg, and a Mw in the range of 80,000 to 90,000 g/mol.

The hinged component may comprise LLDPE having a density in the range of 925 to 935 kg/m³, preferably in the range of 930 to 935 kg/m³ as measured according to ISO 1183, method A, and
a MFI in the range of 2.0 to 15 g/10min, preferably of 2 to 10 g/10min, more preferred of 2 to 8 g/10min, as measured according to ISO 1131-1:2011 at 190°C and at a load of 2.16 kg, and
a Mw in the range of to 50,000 to 100,000 g/mol, preferably 70,000 to 90,000 g/mol, more preferably 80,000 to 90,000 g/mol; and
a Mw/Mn in the range of 4 to 5.

### Polyethylene composition

The polyethylene composition of this disclosure can be made using any conventional blending method such as but not limited to physical blending and in-situ blending by polymerization in multi reactor systems, also called reactor blending.

The polyethylene composition may for example be prepared in at least two sequential polymerization stages, for example by a bimodal or trimodal process. Gas phase, slurry phase or solution phase reactor systems may be used. In such a case the polyethylene composition comprises bimodal or multimodal HDPE. The bimodal or multimodal HDPE is thus a reactor blend of HDPE and LLDPE.

The polyethylene composition may be a reactor blend of an HDPE and LLDPE made in two or more reactors in series under different polymerization conditions. Thus the polyethylene composition may be bimodal HDPE or may comprise bimodal HDPE.

The polyethylene composition may be a blend of bimodal HDPE and LLDPE or unimodal HDPE and LLDPE or may comprise a blend of bimodal HDPE and LLDPE or unimodal HDPE and LLDPE.

The polyethylene composition comprising HDPE and the LLDPE may be applied as dry blend. All components may be added directly on the injection molding machine using a gravimetric dosing system. All components may be added together as a dry blend. Mixing of the materials can be done by industrial mixing devices, such as Nauta mixer and Henschel mixers.

The polyethylene composition comprising HDPE and the LLDPE according to the invention may be obtained by physical blending by molten mixing or by solution blending.

All components of the polyethylene compositions may be added together as a compound by melt blending. The compounding is usually carried out in a mixer (also known as a compounder), a single screw extruder or a twin screw extruder, wherein the polymer and the additives are melt-blended. Compounding techniques are well-known in the art.

The polyethylene composition according to the invention as well as the HDPE and LDPE may contain additives, for instance nucleating agents and clarifiers, stabilizers, release agents, fillers, plasticizers, anti-oxidants, lubricants, antistatics, scratch resistance agents, high performance fillers, pigments and/or colorants, impact modifiers, blowing agents, acid scavengers, recycling additives, coupling agents, antimicrobial, anti-fogging additives, slip additives, anti-blocking additives and polymer processing aids. These additives are well known in the art. The skilled person will choose the type and amount of additives such that they do not detrimentally influence the aimed properties of the composition.

The hinged component may comprise a polyethylene composition which has a density in the range of 940 to 950 kg/m³, preferably of 943 to 948 kg/m³ measured according to according to ISO 1183.

The hinged component may comprise a polyethylene composition which has a MFI in the range of 5 to 20 g/10 min, preferably in the range of 8 to 15 g/10 min, most preferably in the range of 8 to 12 g/10 min measured according to ISO 1133 at 190 °C and a load of 2.16 kg.

The hinged component may comprise a polyethylene composition which has a density in the range of 940 to 950 kg/m³, preferably of 943 to 948 kg/m³ measured according to according to ISO 1183 and a MFI in the range of 5 to 20 g/10 min, preferably in the range of 8 to 15 g/10 min, most preferably in the range of 8 to 12 g/10 min measured according to ISO 1133 at 190 °C and a load of 2.16 kg.

The hinged component may comprise a polyethylene composition which has a density in the range of 940 to 950 kg/m³ measured according to according to ISO 1183 and a MFI in the range of 5 to 20 g/10 min, preferably in the range 8 to 15 g/10 min, most preferably in the range of 8 to 12 g/10 min measured according to ISO 1133 at 190 °C and a load of 2.16 kg.

The hinged component may comprise a polyethylene composition which has a density in the range of 940 to 950 kg/m³ measured according to according to ISO 1183 and a MFI in the range of 8 to 15 g/10 min measured according to ISO 1133 at 190 °C and a load of 2.16 kg.

The hinged component may comprise a polyethylene composition which has an Mw in the range of 50,000 to 120,000 g/mol, preferably in the range of 50,000 to 90,000 g/mol, more preferably in the range of 60,000 to 80,000 g/mol.

The hinged component may comprise a polyethylene composition which has a Mw/Mn in the range of 4 to 20, preferably in the range of 4 to 15, more preferably in the range of 4 to 10, most preferably in the range of 4 to 7.

The hinged component may comprise a polyethylene composition which has an Mw in the range of 50,000 to 120,000 g/mol, preferably in the range of 50,000 to 90,000 g/mol, more preferably in the range of 60,000 to 80,000 g/mol and a Mw/Mn in the range of 4 to 20, preferably in the range of 4 to 15, more preferably in the range of 4 to 10, most preferably in the range of 4 to 7.

The hinged component may comprise a polyethylene composition which has an Mw in the range of 50,000 to 120,000 g/mol, and a Mw/Mn in the range of 4 to 7.

The hinged component may comprise a polyethylene composition which has a density in the range of 940 to 950 kg/m³, measured according to according to ISO 1183 and a MFI in the range of 5 to 20 g/10 min, preferably in the range of 8 to 15 g/10 min, most preferably in the range of 8 to 12 g/10 min measured according to ISO 1133 at 190 °C and a load of 2.16 kg and a Mw in the range of 50,000 to 120,000 g/mol, and a Mw/Mn in the range of 4 to 7.

The hinged component may comprise a polyethylene composition which has a density in the range of 940 to 950 kg/m³, measured according to according to ISO 1183 and a MFI in the range of 5 to 20 g/10 min measured according to ISO 1133 at 190 °C and a load of 2.16 kg and an Mw in the range of 50,000 to 120,000 g/mol, and a Mw/Mn in the range of 4 to 7.

The hinged component may comprise a polyethylene composition which has a flexural modulus in the range of 900 to 1000 MPa, preferably in the range of 930 to 950 MPa measured according to ISO178.

The hinged component may comprise a polyethylene composition which has an ESCR F50 value in the range of 5 to 20 hours, preferably in the range of 8 to 15 hours, measured according to ASTM D1693B, condition B, 10% Igepal CO-630, 50 °C.

The hinged component may comprise a polyethylene composition which has a strain hardening modulus in the range of 5 to 15 MPa, preferably in the range of 8 to 10 MPa measured according to ISO18488.

The hinged component may comprise a polyethylene composition which has an ESCR F50 value in the range of 5 to 20 hours, preferably in the range of 8 to 15 hours, measured according to ASTM D1693B, condition B, 10% Igepal CO-630, 50 °C and a strain hardening modulus in the range of 5 to 15 MPa, preferably in the range of 8 to 10 MPa measured according to ISO18488.

The hinged component may comprise a polyethylene composition which has an ESCR F50 value in the range of 5 to 20 hours, preferably in the range of 8 to 15 hours, measured according to ASTM D1693B, condition B, 10% Igepal CO-630, 50 °C and
a strain hardening modulus in the range of 5 to 15 MPa, preferably in the range of 8 to 10 MPa measured according to ISO18488 and flexural modulus in the range of 900 to 1000 MPa, preferably in the range of 930 to 950 MPa measured according to ISO178.

The hinged component may comprise a polyethylene composition which has an ESCR F50 value in the range of 5 to 20 hours, measured according to ASTM D1693B, condition B, 10% Igepal CO-630, 50 °C and
a strain hardening modulus in the range of 5 to 15 MPa, measured according to ISO18488 and flexural modulus in the range of 900 to 1000 MPa, measured according to ISO178.

The hinged component may comprise a polyethylene composition which has an ESCR F50 value in the range of 5 to 20 hours, measured according to ASTM D1693B, condition B, 10% Igepal CO-630, 50 °C and
a strain hardening modulus in the range of 5 to 15 MPa, measured according to ISO18488 and flexural modulus in the range of 900 to 1000 MPa, measured according to ISO178.

The hinged component may comprise a polyethylene composition which has an ESCR F50 value in the range of 5 to 20 hours, measured according to ASTM D1693B, condition B, 10% Igepal CO-630, 50 °C and a strain hardening modulus in the range of 5 to 15 MPa, measured according to ISO18488 and flexural modulus in the range of 900 to 1000 MPa, measured according to ISO178 and a density in the range of 940 to 950 kg/m³, preferably of 943 to 948 kg/m³ measured according to according to ISO 1183 and a MFI in the range of 5 to 20 g/10 min, preferably in the range of 8 to 15 g/10 min, most preferably in the range of 8 to 12 g/10 min measured according to ISO 1133 at 190 °C and a load of 2.16 kg.

The hinged component may comprise a polyethylene composition which has an ESCR F50 value in the range of 5 to 20 hours, measured according to ASTM D1693B, condition B, 10% Igepal CO-630, 50 °C and a strain hardening modulus in the range of 5 to 15 MPa, measured according to ISO18488 and flexural modulus in the range of 900 to 1000 MPa, measured according to ISO178 and a density in the range of 940 to 950 kg/m³, measured according to according to ISO 1183 and a MFI in the range of 5 to 20 g/10 min, measured according to ISO 1133 at 190 °C and a load of 2.16 kg.

The amount of HDPE and LLDPE in the polyethylene composition may be 90%, preferably 95 %, more preferably 96%, most preferably 98%.

Preferably HDPE and LLDPE are the only polymers in the polyethylene composition.

The amount of HDPE and LLDPE in the polyethylene composition may be 90%, preferably 95 %, more preferably 96%, most preferably 98% and the amount of HDPE may be in the range of 40-60% and the amount of LLDPE may be in the range of 40-60% based on the total amount of HDPE and LLDPE, wherein the total amount of HDPE and LLDPE is 100%.

The amount of HDPE and LLDPE in the polyethylene composition may be 90%, preferably 95 %, more preferably 96%, most preferably 98% and the amount of HDPE may be in the range of 45-55% and the amount of LLDPE may be in the range of 45-55% based on the total amount of HDPE and LLDPE, wherein the total amount of HDPE and LLDPE is 100%.

### Hinged Component

The polyethylene compositions described herein are used in the formation of a hinged component. The hinged component can be a part of a cap or closure or it can be a cap or closure per se.

A hinged component is a component comprising of at least two bodies which are connected to one another through a flexible hinge. The flexible hinge may be a continuous, partial or segmented section, which is typically thinner than the two or more bodies, so as to act as a fulcrum or pivot point about which the two or more bodies may bend. For example the two or more bodies may bend about the flexible hinge from a molded position into a flexed position.

The hinged component may be a living hinge. A living hinge or integral hinge is a thin flexible hinge (flexure bearing) made from the same material as the two rigid pieces it connects. It is typically thinned or cut to allow the rigid pieces to bend along the line of the hinge.

The hinged component, can be made according to any known method, including for example injection molding and compression molding techniques that are well known to persons skilled in the art. Hence, the hinged component comprising the polyethylene composition defined herein can be prepared with a process comprising at least one compression molding step and/or at least one injection molding step.

The hinged component may be manufactured in an injection molding process that creates a thin flexible hinge (flexure bearing) made from the same material as the two rigid pieces at one time as a single piece, and if correctly designed and constructed, it can remain functional over the life of the part.

The hinged component may be made by thermoforming.

The hinged component may be a cap or a part of a cap, for example a screw cap or a snap-top cap. The hinged component is preferably a hinged cap or closure, or the like for bottles, containers, jars, pouches and the like.

Caps and closures may be formed by continuous compression molding or by injection molding. Such closures include, for example, hinged caps, hinged screw caps, hinged snap-top caps, and hinged closures for bottles, containers and the like.

Preferably, the closure or cap comprising the hinged component is made of the same material as the rest of the closure or cap.

Most preferably, the hinged component is a hinged closure or cap.

The hinged component may be a flip-top hinge closure, such as a flip-top hinge closure for use on a plastic bottle or similar containers.

The hinged component may be a one-piece hinged snap-on cap which has a bottom part and a top part linked to each other by a hinge.

When a closure is a hinged closure, it may comprise a hinged component and generally consists of at least two bodies which are connected by a thinner section that acts as a hinge allowing the at least two bodies to bend from an initially molded position. The thinner section may be continuous or web-like, wide or narrow.

A hinged component may be a hinged closure (for bottles, containers and the like) and may consist of two bodies joined to each other by at least one thinner bendable portion (e.g. the two bodies can be joined by a single bridging portion, or more than one bridging portion, or by a webbed portion, etc.). A first body may contain a dispensing hole and which may snap onto or screw onto a container to cover a container opening (e.g. a bottle opening) while a second body may serve as a snap on lid which may mate with the first body.

The hinged component may for example be a living hinged cap or a part of a living hinged cap, for example a living hinged screw cap or a living hinged snap-top cap.

Hinged caps and closures can be made according to any known method, including for example injection molding and compression molding techniques that are well known to persons skilled in the art. Hence, in a closure (or cap) comprising the polyethylene composition is prepared with a process comprising at least one continuous compression molding step and/or at least one injection molding step.

The hinged closures and caps of this disclosure may be used for sealing bottles, containers and the like, for example, bottles that may contain drinkable water, and other foodstuffs, including but not limited to liquids that are non-pressurized. The hinged closures and caps may also be used for sealing bottles and containers containing non-food, such as shampoo and for example cleaning solutions.

The terms cap and closure are used interchangeably in the current disclosure, and both connote any suitably shaped molded article for enclosing, sealing, closing or covering etc., a suitably shaped opening, a suitably molded aperture, an open necked structure or the like used in combination with a container, a bottle, a jar and the like.

A packaging article may comprise the hinged component. The packaging article may be a bottle, a pouch, a jar, a container or a tube, for example a cosmetic tube, a soft tube or a squeeze tube.

The hinged component may comprise a polyethylene composition, wherein the polyethylene composition comprises
a high density polyethylene (HDPE) having a density from 952 to 956 kg/m³ measured according to ISO 1183, a melt flow index from 8 to 40 g/10min measured according to ISO 1133 at a load 2.16 kg and a temperature of 190 °C, a weight average molecular weight Mw measured size exclusion chromatography of in the range from 55,000 to 80,000 g/mol, a molecular weight distribution Mw/Mn in the range from 4 -8,
and a linear low density polyethylene (LLDPE) having a density from 925 to 935 kg/m³ measured according to ISO 1183, a melt flow index from 2.0 to 15 g/10min measured according to ISO 1133 at a load 2.16 kg and a temperature of 190 °C, a weight average molecular weight Mw measured by size exclusion chromatography in the range of 50,000 to 100,000 g/mol and a molecular weight distribution Mw/Mn in the range from 3 to 7;
and wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C,
and wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

The hinged component may comprise a polyethylene composition, wherein the polyethylene composition comprises
a high density polyethylene (HDPE) having a density from 952 to 956 kg/m³ measured according to ISO 1183, a melt flow index from 20 to 35 g/10min measured according to ISO 1133 at a load 2.16 kg and a temperature of 190 °C, a weight average molecular weight Mw measured size exclusion chromatography of in the range from 55,000 to 65,000 g/mol, a molecular weight distribution Mw/Mn in the range from 4 - 8,
and a linear low density polyethylene (LLDPE) having a density from 925 to 935 kg/m³ measured according to ISO 1183, a melt flow index from 2.0 to 10 g/10min measured according to ISO 1133 at a load 2.16 kg and a temperature of 190 °C, a weight average molecular weight Mw measured by size exclusion chromatography in the range of 70,000 to 90,000 g/mol and a molecular weight distribution Mw/Mn in the range from 3 to 7;
and wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C,
and wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

The hinged component may comprise a polyethylene composition, wherein the polyethylene composition comprises
- a high density polyethylene (HDPE) having a density from 950 to 960 kg/m³ measured according to ISO 1183, a melt flow index from 5 to 40 g/10min measured according to ISO 1133 at a load 2.16 kg and a temperature of 190 °C, a weight average molecular weight Mw measured size exclusion chromatography of in the range from 50,000 to 110,000 g/mol, a molecular weight distribution Mw/Mn in the range from 4.0 -10.0, and
- a linear low density polyethylene (LLDPE) having a density from 920 to 940 kg/m³ measured according to ISO 1183, a melt flow index from 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range from 3 to 7;

wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C, wherein the amount of the HDPE is in the range of 40-60% by weight of the total amount of the HDPE and LLDPE
and wherein the amount of the LLDPE is in the range of 40-60% by weight of the total amount HDPE and LLDPE and wherein the total amount of the HDPE and LLDPE is 100 % by weight.

The hinged component may comprise a polyethylene composition, wherein the polyethylene composition comprises
- a high density polyethylene (HDPE) having a density from 950 to 960 kg/m³ measured according to ISO 1183, a melt flow index from 5 to 40 g/10min measured according to ISO 1133 at a load 2.16 kg and a temperature of 190 °C, a weight average molecular weight Mw measured size exclusion chromatography of in the range from 50,000 to 110,000 g/mol, a molecular weight distribution Mw/Mn in the range from 4.0 -10.0, and
- a linear low density polyethylene (LLDPE) having a density from 920 to 940 kg/m³ measured according to ISO 1183, a melt flow index from 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range from 3 to 7;

wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C,
wherein the amount of the HDPE is in the range of 45-55% by weight of the total amount of the HDPE and LLDPE
and wherein the amount of the LLDPE is in the range of 45-55% by weight of the total amount HDPE and LLDPE and wherein the total amount of the HDPE and LLDPE is 100 % by weight.

The hinged component may comprise a polyethylene composition, wherein the polyethylene composition comprises
- a high density polyethylene (HDPE) having a density from 950 to 960 kg/m³ measured according to ISO 1183, a melt flow index from 5 to 40 g/10min measured according to ISO 1133 at a load 2.16 kg and a temperature of 190 °C, a weight average molecular weight Mw measured size exclusion chromatography of in the range from 50,000 to 110,000 g/mol, a molecular weight distribution Mw/Mn in the range from 4.0 -10.0, and
- a linear low density polyethylene (LLDPE) having a density from 920 to 940 kg/m³ measured according to ISO 1183, a melt flow index from 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range from 3 to 7;

wherein the polyethylene composition has an overall density from 940 to 950 kg/m³ measured according to ISO 1183 and an overall melt flow index from 5 to 20 g/10min measured according to ISO 1133 at a load 2.16 kg and a temperature of 190 °C, wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

The hinged component may comprise a polyethylene composition, wherein the polyethylene composition comprises
- a high density polyethylene (HDPE) having a density from 950 to 960 kg/m³ measured according to ISO 1183, a melt flow index from 5 to 40 g/10min measured according to ISO 1133 at a load 2.16 kg and a temperature of 190 °C, a weight average molecular weight Mw measured size exclusion chromatography of in the range from 50,000 to 110,000 g/mol, a molecular weight distribution Mw/Mn in the range from 4.0 -10.0, and
- a linear low density polyethylene (LLDPE) having a density from 920 to 940 kg/m³ measured according to ISO 1183, a melt flow index from 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range from 3 to 7;

wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C, and an Mw in the range of 50,000 to 120,000 g/mol, and
Mw/Mn in the range of 4 to 20, preferably in the range of 4 to 15, more preferably in the range of 4 to 10, most preferably in the range of 4 to 7.
wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

The hinged component may comprise a polyethylene composition, wherein the polyethylene composition comprises
- a high density polyethylene (HDPE) having a density from 950 to 960 kg/m³ measured according to ISO 1183, a melt flow index from 5 to 40 g/10min measured according to ISO 1133 at a load 2.16 kg and a temperature of 190 °C, a weight average molecular weight Mw measured size exclusion chromatography of in the range from 50,000 to 110,000 g/mol, a molecular weight distribution Mw/Mn in the range from 4.0 -10.0, and
- a linear low density polyethylene (LLDPE) having a density from 920 to 940 kg/m³ measured according to ISO 1183, a melt flow index from 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range from 3 to 7;

wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C, and
an Mw in the range of 50,000 to 120,000 g/mol, preferably in the range of 50,000 to 90,000 g/mol, more preferably in the range of 60,000 to 80,000 g/mol and
Mw/Mn in the range of 4 to 15, more preferably in the range of 4 to 10.
wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

The hinged component may comprise a polyethylene composition, wherein the polyethylene composition comprises
- a high density polyethylene (HDPE) having a density from 950 to 960 kg/m³ measured according to ISO 1183, a melt flow index from 5 to 40 g/10min measured according to ISO 1133 at a load 2.16 kg and a temperature of 190 °C, a weight average molecular weight Mw measured size exclusion chromatography of in the range from 50,000 to 110,000 g/mol, a molecular weight distribution Mw/Mn in the range from 4.0 -10.0, and
- a linear low density polyethylene (LLDPE) having a density from 920 to 940 kg/m³ measured according to ISO 1183, a melt flow index from 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range from 3 to 7;
   wherein the polyethylene composition has an overall density from 935 to 950 kg/m³ measured according to ISO 1183 and an overall melt flow index from 5 to 30 g/10min measured according to ISO 1133 at a load 2.16 kg and a temperature of 190 °C,
- an ESCR F50 value in the range of 5 to 20 hours, preferably in the range of 8 to 15 hours, measured according to ASTM D1693B, condition B, 10% Igepal CO-630, 50 °C and
- a strain hardening modulus in the range of 5 to 15 MPa, preferably in the range of 8 to 10 MPa measured according to ISO18488 and
   wherein the amount of the HDPE is in the range of 30-70% by weight of the total amount of the HDPE and LLDPE
   and wherein the amount of the LLDPE is in the range of 30-70% by weight of the total amount HDPE and LLDPE and wherein the total amount of the HDPE and LLDPE is 100 % by weight.

The invention will now be illustrated by the following non-limiting examples.

### Examples

The following test methods were used

### -Melt flow index, MFI

MFI was measured according to ISO 1133 at 190 °C and a load of 2.16 kg for HDPE, LLDPE and inventive examples.

MFI was measured according to ISO 1133 at 230 °C and a load of 2.16 kg for PP.

### -Density

Density was measured according to ISO 1183. Specimens prepared according to ISO17855-2, compression molding temperature: 180°C, compression molding cooling rate: 15°C/min

### -ESCR F50

The F50 was measured according to ASTM D1693B, condition B, 10% Igepal CO-630, 50 °C
- Specimen: compression molded specimen prepared according to ISO 17855-2, specimen thickness: 1.84-1.97 mm, notch depth: 0.3-0.4mm.
- F50 determination: Ten specimens are used, and a 50% failure point (F50) is determined by the graphical method in ANNEX A1 of D1693.

### -Strain hardening test

Strain hardening modulus was measured according to ISO18488.

### -Tensile test, tensile modulus

For HDPE samples and inv. Ex. 1 the following conditions were applied
- Specimens were made by compression molding according to ISO 1872-2;
- Tests specimen according to ISO 527-2 type 1BA, thickness 2mm
- Speed of testing: 50mm/min

For the PP (QR673K) sample the following conditions were applied
- Specimens were made by injection molding
- Tests specimen according to ISO 527-2 type 1A, thickness 4mm
- Speed of testing: 50mm/min

### -Flexural modulus

- Specimens were made by compression molding according to ISO 17855-2;
- Specimen dimensions: 80 x 10x 4mm
- The flexural test was according to ISO178
- Speed of test: 2mm/min

### -Size exclusion chromatography, SEC

The molecular structure parameters were calculated by SEC universal based on IR5. Method: IAV Molecular Characterisation, Code: SEC-HT-2 (universal calculation) Chromatography: Polymer Laboratories PL-GPC220 (System ID: C7).

Detection: Polymer Laboratories PL BV-400 viscometer; Refractive index detector. Column set: three Polymer Laboratories 13 µm PLgel Olexis, 300 x 7.5 mm.

PE molar mass calibration: performed with linear PE standards.

PP molar mass calibration: linear PE standard were used for calibration of the system. A PP molar mass calibration was obtained after conversion from PE to PP using the Mark-Houwink constants of PE and PP.

### Examples and results

HDPE 1-4 are commercially available HDPE resins intended for use as screw caps. PP is a commercially available polypropylene random copolymer resin that is intended to be used for hinged caps.

Inv. Ex. 1 is a mixture of 50 wt% HDPE (HDPE resin CC3054 of SABIC) and 50 wt% LLDPE (HDPE resin R50035EE of SABIC). Inv. Ex. 1 was prepared by compounding in an extruder. This was done by using the KraussMaffei Berstorff GmbH ZE25Ax48D twin-screw extruder, with screw diameter of 25 mm and L/D ratio of 48:1. Compounding was performed at 230 °C using a screw speed of 350 rpm.

Table 1 give an overview of the materials that were used and their MFI and density.

**Table 1**

| Material | Material | MFI 2.16 [g/10min] | Density [kg/m³] |
|---|---|---|---|
| QR673K (PP) | PP | 25 (@230°C) | 905 |
| CC3054 (HDPE) | HDPE 1 | 30 | 954 |
| CC2056 (HDPE) | HDPE 2 | 20 | 956 |
| M1053 (HDPE) | HDPE 3 | 10 | 953 |
| CC860V (HDPE) | HDPE 4 | 7.6 | 960 |
| R50035EE (LLDPE) | LLDPE | 5 | 933 |
| 50% CC3054 (HDPE) + 50% R50035EE (LLDPE) | Inv. Ex.1 | 9.8 | 946 |

Table 2 gives an overview on SEC data

**Table 2**

| Material | Material | Mn (kDa) | Mw (kDa) | Mz (kDa) | Mw/Mn (-) | Mz/Mw (-) |
|---|---|---|---|---|---|---|
| *QR673K (PP)* | PP | 37 | 215 | 600 | 5,8 | 2,8 |
| CC3054 (HDPE) | HDPE 1 | 10 | 63 | 1400 | 6,1 | 22,9 |
| CC2056 (HDPE) | HDPE 2 | 11 | 65 | 790 | 6,0 | 12,2 |
| M1053 (HDPE) | HDPE 3 | 11 | 75 | 670 | 7,1 | 8,9 |
| CC860V (HDPE) | HDPE 4 | 11 | 79 | 640 | 7,1 | 8,1 |
| R50035EE (LLDPE) | LLDPE | 19 | 86 | 440 | 4,5 | 5,1 |
| 50% CC3054 (HDPE) + 50% R50035EE (LLDPE) | Inv. Ex.1 | 9,3 | 150 | 860 | 16,1 | 5,7 |

Table 3 gives an overview on the mechanical properties

**Table 3**

| Material | Material | Flexural Modulus [MPa] | Tensile modulus [MPa] | ESCR F50 [hrs] | Strain hardening Modulus [MPa] |
|---|---|---|---|---|---|
| QR673K (PP) | PP | | 1050 | - | - |
| CC3054 (HDPE) | HDPE 1 | | 1100 | 0 | sample broken |
| CC2056 (HDPE) | HDPE 2 | | 1200 | 2 | sample broken |
| M1053 (HDPE) | HDPE 3 | | 1100 | 5 | 6.2 |
| CC860V (HDPE) | HDPE 4 | | 1300 | 5 | sample broken |
| R50035EE (LLDPE) | LLDPE | - | 636 | - | - |
| 50% CC3054 (HDPE) + 50% R50035EE (LLDPE) | Inv. Ex.1 | 937 | 877 | 10 | 8.6 |

### -Processability measured by spiral mold

**Table 4. Material processability evaluation using a spiral mould**

| Material | Flow length [mm] using a spiral mould with diameter of 0.5 mm | Flow length [mm] using a spiral mould with diameter of 1 mm | Flow length [mm] using a spiral mould with diameter of 1.5 mm | Flow length [mm] using a spiral mould with diameter of 2 mm |
|---|---|---|---|---|
| QR673K (PP) | 90 | 258 | 390 | >430 |
| CC3054 (HDPE) | 58 | 178 | 280 | 430 |
| CC2056 (HDPE) | 50 | 150 | 239 | 370 |
| M1053 (HDPE) | 40 | 127 | 191 | 300 |
| CC860V (HDPE) | 47 | 130 | 192 | 292 |
| 50% CC3054 (HDPE) + 50% R50035EE (LLDPE) | 43 | 134 | 210 | 330 |

Table 4 shows the process-ability of the materials for injection molding. First, injection molding with a spiral mould was performed, all the materials were injection molded with a melt temperature of 220 °C, injection speed of 56.6 mm/s and until an injection pressure of 1200 bar was reached. The length of the flow at different thicknesses were measured and listed in Table 4. The longer the flow length indicate the better processability of the material during injection molding. The process-ability of the 50% CC3054 (HDPE) + 50% R50035EE (LLDPE) is comparable to or slightly better than M1053.

### Process-ability measured during hinged cap injection molding

A Husky injection machine H120-RS35/28 with a 4-cavity hinge cap mold was used. The machine has a clamping force of 120 tons and is equipped with a standard 3-zone screw of Φ28mm & L/D 25.1. The hinge cap tool has a typical butterfly hinge design and work with both PP and HDPE materials. There is also in-mold-closing unit integrated in the tool, which enables to close the caps in the tool before the caps been ejected.

**Table 5. Hinge component injection molding parameters**

| Material | Cycle time [s] | Processing temerature [°C] | Mold temperature [°C] | Injection speed [cm³/s] |
|---|---|---|---|---|
| QR673K (PP) | 10 | 230 | 13 | 39 |
| CC3054 (HDPE) | 9.9 | 205 | 13 | 35 |
| CC2056 (HDPE) | 9.9 | 205 | 13 | 35 |
| M1053 (HDPE) | 9.9 | 205 | 13 | 35 |
| CC860V (HDPE) | 9.9 | 220 | 13 | 40 |
| 50% CC3054 (HDPE) + 50% R50035EE (LLDPE) | 9.8 | 205 | 13 | 35 |

**Table 6. Material process-ability evaluation during cap injection molding**

| Material | Injection pressure during cap injection molding [MPa] |
|---|---|
| QR673K (PP) | 660 |
| CC3054 (HDPE) | 1099 |
| CC2056 (HDPE) | 1382 |
| M1053 (HDPE) | 1715 |
| CC860V (HDPE) | 1787 |
| 50% CC3054 (HDPE) + 50% R50035EE (LLDPE) | 1464 |

The maximum injection pressure measured during cap injection molding also indicate the process-ability of the materials. The process-ability of the 50% CC3054 (HDPE) + 50% R50035EE (LLDPE) is comparable to or slightly better than M1053, which is in line with the results from the spiral mould results.

### Fatigue performance of hinged component

The fatigue performance of the hinged caps was evaluated by flexing the hinge using a bending tester. The base part and the flip-top part of the cap are clamped separately by the fixture, and the base part was bended along the hinge while the flip-top was fixed and not moved. The base part of the caps were bent from 180° (open) to an angle of 30° that is close to the closing position. Each cap was bended until hinge failure was observed or reached 5000 times of bending. The results are listed in Table 7.

**Table 7. Hinge fatigue bending test results**

| Material | Hinge bending fatigue test [number of cycles before hinge failure] |
|---|---|
| QR673K (PP) | More than 5000 |
| CC3054 (HDPE) | 2000 |
| CC2056 (HDPE) | 3113 |
| M1053 (HDPE) | 4500 |
| CC860V (HDPE) | 1700 |
| 50% CC3054 (HDPE) | More than 5000 |
| + 50% R50035EE (LLDPE) | |

Inv. Ex. 1 showed good hinge fatigue performance (> 5000 bending cycles).

### ESCR of a hinged cap

The ESCR performance of the hinged cap was evaluated in the following way ESCR of a hinged cap

The ESCR performance of the hinged cap was evaluated in the following way
1) emerging the closed hinged cap in an aqueous solution of 10% Igepal; and conditioning the closed hinged caps in an aqueous solution of 10% Igepal in an oven at 40°C for 3 days.
2) evaluating the performance of the hinged cap after conditioning by taking the hinged caps out of the Igepal solution and opening and closing the caps manually until failure or up to 120 cycles. Five samples were tested for each material.

Table 5 shows the ESCR test results, reported are the average number of bending cycles until hinge failure or up to 120 cycles.

**Table 8. Hinge ESCR test results**

| Material | Open/close cycles without failure after 3 days conditioning | Hinge failure mode |
|---|---|---|
| QR673K (PP) | 120 | No failure |
| CC3054 (HDPE) | 0 | Side hinge failure |
| CC2056 (HDPE) | 0 | Side hinge failure |
| M1053 (HDPE) | 0 | Side hinge failure |
| CC860V (HDPE) | 1 | Side hinge failure |
| **50% CC3054 (HDPE) + 50% R50035EE (LLDPE)** | 120 | No failure |

Inv. Ex. 1 showed a good hinge performance (> 120 open/close cycles) after ESCR conditioning.

The test results show that the hinged component made of Inv. Ex. 1 gives balanced properties for injection molding processability and hinge performance (hinge fatigue bending and ESCR).

## Claims

1. Hinged component comprising a polyethylene composition, the polyethylene composition comprising
- a high density polyethylene (HDPE) having a density in the range of 950 to 960 kg/m³ measured according to ISO 1183, a melt flow index in the range of 5 to 40 g/10min measured according to ISO 1133 at a load 2.16 kg and a temperature of 190 °C, a weight average molecular weight Mw measured by size exclusion chromatography of in the range of 50,000 to 110,000 g/mol, a molecular weight distribution Mw/Mn in the range of 4.0 to 10.0, and
- a linear low density polyethylene (LLDPE) having a density in the range of 920 to 940 kg/m³ measured according to ISO 1183, a melt flow index in the range of 1 to 20 g/10min measured according to ISO 1133 at a load 2.16 kg and a temperature of 190 °C, a weight average molecular weight Mw measured by size exclusion chromatography in the range of 40,000 to 120,000 g/mol and a molecular weight distribution Mw/Mn in the range of 3 to 7;
wherein the polyethylene composition has an overall density in the range of 935 to 950 kg/m³ measured according to ISO 1183 and an overall melt flow index in the range of 5 to 30 g/10min measured according to ISO 1133 at a load 2.16 kg and a temperature of 190 °C,
wherein the amount of the HDPE is in the range of 30-70% by weight of the total amount of the HDPE and LLDPE
and wherein the amount of the LLDPE is in the range of 30-70% by weight of the total amount HDPE and LLDPE and wherein the total amount of the HDPE and LLDPE is 100 % by weight.

2. Hinged component according to any one of the preceding claims wherein the LLDPE has
- a density in the range of 925 to 935 kg/m³, preferably in the range of 930 to 935 kg/m³ as measured according to ISO 1183, method A, and/or
- a MFI in the range of 2.0 to 15 g/10min, preferably of 2 to 10 g/10min, more preferred of 2 to 8 g/10min, as measured according to ISO 1131-1:2011 at 190°C and at a load of 2.16 kg, and/or
- a Mw in the range of to 50,000 to 100,000 g/mol, preferably 70,000 to 90,000 g/mol, more preferably 80,000 to 90,000 g/mol; and/or
- a Mw/Mn in the range of 4 to 5.

3. Hinged component according to any one of the preceding claims wherein the HDPE has
- a density in the range of 952 to 956 kg/m³, as measured according to ISO 1183, method A, and/or
- a MFI in the range of 8 to 40 g/10min, preferably of 20 to 35 g/10min, more preferred of 28 to 35 g/10min, as measured according to ISO 1131-1:2011 at 190°C and at a load of 2.16 kg, and/or
- a Mw in the range of 55,000 to 80,000 g/mol, preferably in the range of 55,000 to 70,000 g/mol, more preferably in the range of 55,000 to 65,000 g/mol, and/or
- a Mw/Mn in the range of to 4 to 8, preferably in the range from 4-7, more preferably in the range from 5-6.

4. Hinged component according to any one of the preceding claims wherein the amount of HDPE is in the range of 40-60 % by weight, preferably in the range of 45-55 % by weight of the total amount HDPE and LLDPE and wherein the total amount of the HDPE and LLDPE is 100 % by weight.

5. Hinged component according to any one of the preceding claims wherein the amount of LLDPE is in the range of 40-60 % by weight, preferably in the range of 45-55 % by weight of the total amount HDPE and LLDPE and wherein the total amount of the HDPE and LLDPE is 100 % by weight.

6. Hinged component according to any one of the preceding claims wherein the polyethylene composition has
- a density in the range of 940 to 950 kg/m³, preferably of 943 to 948 kg/m³ measured according to according to ISO 1133 and/ or
- a MFI in the range of 5 to 20 g/10 min, preferably in the range of 8 to15 g/10 min, most preferably in the range of 8 to 12 g/10 min measured according to ISO 1133 at 190 °C and a load of 2.16 kg

7. Hinged component according to any one of the preceding claims wherein the polyethylene composition has an Mw in the range of 50,000 to 120,000 g/mol, preferably in the range of 50,000 to 90,000 g/mol, more preferably in the range of 60,000 to 80,000 g/mol and/or
Mw/Mn in the range of 4 to 20, preferably in the range of 4 to 15, more preferably in the range of 4 to 10, most preferably in the range of 4 to 7.

8. Hinged component according to any one of the preceding claims wherein the polyethylene composition has a flexural modulus in the range of 900 to 1000 MPa, preferably in the range of 930 to 950 MPa measured according to ISO178.

9. Hinged component according to any one of the preceding claims wherein the polyethylene composition has
- an ESCR F50 value in the range of 5 to 20 hours, preferably in the range of 8 to 15 hours, measured according to ASTM D1693B, condition B, 10% Igepal CO-630, 50 °C and/or
- a strain hardening modulus in the range of 5 to 15 MPa, preferably in the range of 8 to 10 MPa measured according to ISO18488.

10. Hinged component according to any one of the preceding claims wherein the HDPE is a bimodal, multimodal or unimodal HDPE.

11. Hinged component according to any of claims 1-9 wherein the polyethylene composition is a bimodal or multimodal HDPE comprising HDPE and LLDPE.

12. Hinged component according to any of the proceeding claims wherein the hinged component is a living hinge.

13. Hinged component according to any of the proceeding claims wherein the hinged component is a cap or a part of a cap, for example a screw cap or a snap-top cap.

14. Packaging article comprising the hinged component according to any of the proceeding claims.

15. Packaging article to claim 14 wherein the packaging article is a bottle, a pouch, a jar, a container or a tube, for example a cosmetic tube, a soft tube or a squeeze tube.

## Patentansprüche

1. Scharnierkomponente, umfassend eine Polyethylenzusammensetzung, wobei die Polyethylenzusammensetzung umfasst
- ein Polyethylen hoher Dichte (HDPE), aufweisend eine Dichte im Bereich von 950 bis 960 kg/m³, gemessen nach ISO 1183, einem Schmelzflussindex im Bereich von 5 bis 40 g/10 min, gemessen nach ISO 1133 bei einer Last von 2,16 kg und einer Temperatur von 190 °C, ein gewichtsmittleres Molekulargewicht Mw, gemessen durch Größenausschlusschromatographie, im Bereich von 50.000 bis 110.000 g/mol, eine Molekulargewichtsverteilung Mw/Mn im Bereich von 4,0 bis 10,0, und
- ein lineares Polyethylen niedriger Dichte (LLDPE), aufweisend eine Dichte im Bereich von 920 bis 940 kg/m³, gemessen nach ISO 1183, und einen Schmelzflussindex im Bereich von 1 bis 20 g/10 min, gemessen nach ISO 1133 bei einer Last von 2,16 kg und einer Temperatur von 190 °C, ein gewichtsmittleres Molekulargewicht Mw, gemessen durch Größenausschlusschromatographie, im Bereich von 40.000 bis 120.000 g/mol und eine Molekulargewichtsverteilung Mw/Mn im Bereich von 3 bis 7;
wobei die Polyethylenzusammensetzung eine Gesamtdichte im Bereich von 935 bis 950 kg/m³, gemessen nach ISO 1183, und einen Gesamtschmelzflussindex im Bereich von 5 bis 30 g/10 min, gemessen nach ISO 1133 bei einer Last von 2,16 kg und einer Temperatur von 190 °C, aufweist,
wobei die Menge des HDPE im Bereich von 30-70 Gew.-% der Gesamtmenge des HDPE und LLDPE liegt,
und wobei die Menge des LLDPE im Bereich von 30-70 Gew.-% der Gesamtmenge HDPE und LLDPE liegt, und wobei die Gesamtmenge des HDPE und LLDPE 100 Gew.-% beträgt.

2. Scharnierkomponente nach einem der vorstehenden Ansprüche, wobei das LLDPE Folgendes aufweist
- eine Dichte im Bereich von 925 bis 935 kg/m³, vorzugsweise im Bereich von 930 bis 935 kg/m³, wie nach ISO 1183, Verfahren A gemessen, und/oder
- einen MFI im Bereich von 2,0 bis 15 g/10 min, vorzugsweise von 2 bis 10 g/10 min, bevorzugter von 2 bis 8 g/10 min, wie nach ISO 1131-1:2011 bei 190 °C und bei einer Last von 2,16 kg gemessen, und/oder
- ein Mw im Bereich von bis 50.000 bis 100.000 g/mol, vorzugsweise 70.000 bis 90.000 g/mol, bevorzugter 80.000 bis 90.000 g/mol; und/oder
- ein Mw/Mn im Bereich von 4 bis 5.

3. Scharnierkomponente nach einem der vorstehenden Ansprüche, wobei das HDPE Folgendes aufweist
- eine Dichte im Bereich von 952 bis 956 kg/m³, wie nach ISO 1183, Verfahren A gemessen, und/oder
- einen MFI im Bereich von 8 bis 40 g/10 min, vorzugsweise von 20 bis 35 g/10 min, bevorzugter von 28 bis 35 g/10 min, wie nach ISO 1131-1:2011 bei 190 °C und bei einer Last von 2,16 kg gemessen, und/oder
- ein Mw im Bereich von 55.000 bis 80.000 g/mol, vorzugsweise im Bereich von 55.000 bis 70.000 g/mol, bevorzugter im Bereich von 55.000 bis 65.000 g/mol, und/oder
- ein Mw/Mn im Bereich von bis 4 bis 8, vorzugsweise im Bereich von 4-7, bevorzugter im Bereich von 5-6.

4. Scharnierkomponente nach einem der vorstehenden Ansprüche, wobei die Menge an HDPE im Bereich von 40-60 Gew.-%, vorzugsweise im Bereich von 45-55 Gew.-% der Gesamtmenge HDPE und LLDPE liegt, und wobei die Gesamtmenge des HDPE und LLDPE 100 Gew.-% beträgt.

5. Scharnierkomponente nach einem der vorstehenden Ansprüche, wobei die Menge an LLDPE im Bereich von 40-60 Gew.-%, vorzugsweise im Bereich von 45-55 Gew.-% der Gesamtmenge HDPE und LLDPE liegt, und wobei die Gesamtmenge des HDPE und LLDPE 100 Gew.-% beträgt.

6. Scharnierkomponente nach einem der vorstehenden Ansprüche, wobei die Polyethylenzusammensetzung Folgendes aufweist
- eine Dichte im Bereich von 940 bis 950 kg/m³, vorzugsweise von 943 bis 948 kg/m³, gemessen nach ISO 1183, und/oder
- einen MFI im Bereich von 5 bis 20 g/10 min, vorzugsweise im Bereich von 8 bis 15 g/10 min, besonders bevorzugt im Bereich von 8 bis 12 g/10 min, gemessen nach ISO 1133 bei 190 °C und einer Last von 2,16 kg.

7. Scharnierkomponente nach einem der vorstehenden Ansprüche, wobei die Polyethylenzusammensetzung ein Mw im Bereich von 50.000 bis 120.000 g/mol, vorzugsweise im Bereich von 50.000 bis 90.000 g/mol, bevorzugter im Bereich von 60.000 bis 80.000 g/mol aufweist, und/oder
Mw/Mn im Bereich von 4 bis 20, vorzugsweise im Bereich von 4 bis 15, bevorzugter im Bereich von 4 bis 10, besonders bevorzugt im Bereich von 4 bis 7.

8. Scharnierkomponente nach einem der vorstehenden Ansprüche, wobei die Polyethylenzusammensetzung einen Biegemodul im Bereich von 900 bis 1000 MPa, vorzugsweise im Bereich von 930 bis 950 MPa, gemessen nach ISO178, aufweist.

9. Scharnierkomponente nach einem der vorstehenden Ansprüche, wobei die Polyethylenzusammensetzung Folgendes aufweist
- einen ESCR-F50-Wert im Bereich von 5 bis 20 Stunden, vorzugsweise im Bereich von 8 bis 15 Stunden, gemessen nach ASTM D1693B, Bedingung B, 10 % Igepal CO-630, 50 °C und/oder
- einen Kaltverfestigungsmodul im Bereich von 5 bis 15 MPa, vorzugsweise im Bereich von 8 bis 10 MPa, gemessen nach ISO18488.

10. Scharnierkomponente nach einem der vorstehenden Ansprüche, wobei das HDPE ein bimodales, multimodales oder unimodales HDPE ist.

11. Scharnierkomponente nach einem der Ansprüche 1-9, wobei die Polyethylenzusammensetzung ein bimodales oder multimodales HDPE ist, das HDPE und LLDPE umfasst.

12. Scharnierkomponente nach einem der vorstehenden Ansprüche, wobei die Scharnierkomponente ein Biegescharnier ist.

13. Scharnierkomponente nach einem der vorstehenden Ansprüche, wobei die Scharnierkomponente eine Kappe oder ein Teil einer Kappe, beispielsweise eine Schraubkappe oder eine Schnappdeckelkappe ist.

14. Verpackungsartikel, umfassend die Scharnierkomponente nach einem der vorstehenden Ansprüche.

15. Verpackungsartikel nach Anspruch 14, wobei der Verpackungsartikel eine Flasche, ein Beutel, ein Becher, ein Behälter oder eine Tube, zum Beispiel eine Kosmetiktube, eine weiche Tube oder eine Quetschtube ist.

## Revendications

1. Composant articulé comprenant une composition de polyéthylène, la composition de polyéthylène comprenant
- un polyéthylène à haute densité (PEHD) présentant une masse volumique dans la plage de 950 à 960 kg/m³ mesurée selon la norme ISO 1183, un indice de fluidité à chaud dans la plage de 5 à 40 g/10 min mesuré selon la norme ISO 1133 à une charge de 2,16 kg et une température de 190 °C, un poids moléculaire moyen en poids Mw mesuré par chromatographie d'exclusion stérique dans la plage de 50 000 à 110 000 g/mol, une distribution de poids moléculaire Mw/Mn dans la plage de 4,0 à 10,0, et
- un polyéthylène basse densité linéaire (LLDPE) présentant une masse volumique dans la plage de 920 à 940 kg/m³ mesurée selon la norme ISO 1183, un indice de fluidité à chaud dans la plage de 1 à 20 g/10 min mesuré selon la norme ISO 1133 à une charge de 2,16 kg et une température de 190 °C, un poids moléculaire moyen en poids Mw mesuré par chromatographie d'exclusion stérique dans la plage de 40 000 à 120 000 g/mol et une distribution de poids moléculaire Mw/Mn dans la plage de 3 à 7 ;
dans lequel la composition de polyéthylène présente une masse volumique globale dans la plage de 935 à 950 kg/m³ mesurée selon la norme ISO 1183 et un indice de fluidité à chaud global dans la plage de 5 à 30 g/10 min mesuré selon la norme ISO 1133 à une charge de 2,16 kg et une température de 190 °C,
dans lequel la quantité de PEHD est dans la plage de 30 à 70 % en poids de la quantité totale de PEHD et de LLDPE
et dans lequel la quantité de LLDPE est dans la plage de 30 à 70 % en poids de la quantité totale de PEHD et de LLDPE et dans lequel la quantité totale de PEHD et de LLDPE est de 100 % en poids.

2. Composant articulé selon l'une quelconque des revendications précédentes, dans lequel le LLDPE présente
- une masse volumique dans la plage de 925 à 935 kg/m³, de préférence dans la plage de 930 à 935 kg/m³ telle que mesurée selon la norme ISO 1183, procédé A, et/ou
- un MFI dans la plage de 2,0 à 15 g/10 min, de préférence de 2 à 10 g/10 min, plus préférentiellement de 2 à 8 g/10 min, tel que mesuré selon la norme ISO 1131-1:2011 à 190 °C et sous une charge de 2,16 kg, et/ou
- un Mw dans la plage de 50 000 à 100 000 g/mol, de préférence de 70 000 à 90 000 g/mol, plus préférentiellement de 80 000 à 90 000 g/mol ; et/ou
- un rapport Mw/Mn dans la plage de 4 à 5.

3. Composant articulé selon l'une quelconque des revendications précédentes, dans lequel le PEHD présente
- une masse volumique dans la plage de 952 à 956 kg/m³, mesurée selon la norme ISO 1183, procédé A, et/ou
- un MFI dans la plage de 8 à 40 g/10 min, de préférence de 20 à 35 g/10 min, plus préférentiellement de 28 à 35 g/10 min, tel que mesuré selon la norme ISO 1131-1:2011 à 190 °C et sous une charge de 2,16 kg, et/ou
- un Mw dans la plage de 55 000 à 80 000 g/mol, de préférence dans la plage de 55 000 à 70 000 g/mol, plus préférentiellement dans la plage de 55 000 à 65 000 g/mol, et/ou
- un rapport Mw/Mn dans la plage de 4 à 8, de préférence dans la plage de 4 à 7, plus préférentiellement dans la plage de 5 à 6.

4. Composant articulé selon l'une quelconque des revendications précédentes, dans lequel la quantité de PEHD est dans la plage de 40 à 60 % en poids, de préférence dans la plage de 45 à 55 % en poids de la quantité totale de PEHD et de LLDPE, et dans lequel la quantité totale de PEHD et de LLDPE est de 100 % en poids.

5. Composant articulé selon l'une quelconque des revendications précédentes, dans lequel la quantité de LLDPE est dans la plage de 40 à 60 % en poids, de préférence dans la plage de 45 à 55 % en poids de la quantité totale de PEHD et de LLDPE, et dans lequel la quantité totale de PEHD et de LLDPE est de 100 % en poids.

6. Composant articulé selon l'une quelconque des revendications précédentes, dans lequel la composition de polyéthylène présente
- une masse volumique dans la plage de 940 à 950 kg/m³, de préférence dans la plage de 943 à 948 kg/m³ mesurée selon la norme ISO 1183 et/ou
- un MFI dans la plage de 5 à 20 g/10 min, de préférence dans la plage de 8 à 15 g/10 min, le plus préférentiellement dans la plage de 8 à 12 g/10 min mesuré selon la norme ISO 1133 à 190 °C et une charge de 2,16 kg.

7. Composant articulé selon l'une quelconque des revendications précédentes, dans lequel la composition de polyéthylène présente un Mw dans la plage de 50 000 à 120 000 g/mol, de préférence dans la plage de 50 000 à 90 000 g/mol, plus préférentiellement dans la plage de 60 000 à 80 000 g/mol, et/ou
un rapport Mw/Mn dans la plage de 4 à 20, de préférence dans la plage de 4 à 15, plus préférentiellement dans la plage de 4 à 10, le plus préférentiellement dans la plage de 4 à 7.

8. Composant articulé selon l'une quelconque des revendications précédentes dans lequel la composition de polyéthylène présente un module de flexion dans la plage de 900 à 1 000 MPa, de préférence dans la plage de 930 à 950 MPa mesuré selon la norme ISO178.

9. Composant articulé selon l'une quelconque des revendications précédentes, dans lequel la composition de polyéthylène présente
- une valeur ESCR F50 dans la plage de 5 à 20 heures, de préférence dans la plage de 8 à 15 heures, mesurée selon la norme ASTM D1693B, condition B, 10 % Igepal CO-630, 50 °C, et/ou
- un module d'écrouissage dans la plage de 5 à 15 MPa, de préférence dans la plage de 8 à 10 MPa mesuré selon la norme ISO18488.

10. Composant articulé selon l'une quelconque des revendications précédentes dans lequel le PEHD est un PEHD bimodal, multimodal ou unimodal.

11. Composant articulé selon l'une quelconque des revendications 1-9, dans lequel la composition de polyéthylène est un PEHD bimodal ou multimodal comprenant du PEHD et du LLDPE.

12. Composant articulé selon l'une quelconque des revendications précédentes, dans lequel le composant articulé est une charnière vivante.

13. Composant articulé selon l'une quelconque des revendications précédentes, dans lequel le composant articulé est un capuchon ou une partie d'un capuchon, par exemple un capuchon à vis ou un capuchon à clapet.

14. Article d'emballage comprenant le composant articulé selon l'une quelconque des revendications précédentes.

15. Article d'emballage selon la revendication 14, dans lequel l'article d'emballage est une bouteille, une pochette, un pot, un récipient ou un tube, par exemple un tube cosmétique, un tube souple ou un tube compressible.
